# EUROPÄISCHE PATENTANMELDUNG

(11) **EP 0 811 833 A1**
(43) Veröffentlichungstag der Anmeldung: **10.12.1997**
(21) Anmeldenummer: 96810362.2
(22) Anmeldetag: 04.06.1996
(51) Int. Cl.: G01L 23/10, G01L 23/08

(54) **Drucksensor für gasförmige und/oder flüssige Medien**

(71) Anmelder: K.K. HOLDING AG, CH-8408 Winterthur (CH)
(72) Erfinder: Engeler, Paul, 8500 Frauenfeld (CH); Sonderegger, Christof, 8413 Neftenbach (CH)

(57) **Zusammenfassung**

Der erfindungsgemässe Drucksensor (10), insbesondere für Überwachungs-Anordnungen von Brennkraftmaschinen, bezweckt die kontinuierliche Einhaltung optimaler Leistungsumsetzung der Brennstoffe unter möglichst sicheren und langfristigen Betriebsverhältnissen. Ideale Kontrollparameter dazu bieten die Messung des Verbrennungsdrucks eines jeden Zylinders und des Einspritzdruckes des flüssigen oder gasförmigen Brennstoffs. Dazu wird ein neuer Drucksensor (10) vorgeschlagen, der in der Folge beschrieben wird.

Sein scheibenförmiger Sensorkörper (12) weist einen Druckraum für das zu untersuchende Medium auf. In diesen Druckraum des Sensorkörpers (12) ist ein Bolzenelement (16) eingesetzt, wodurch ein rohrförmiger Druckspalt (19) geringen Volumens entsteht.

Das Bolzenelement (16) reduziert einerseits das Totalvolumen des Druckraumes und bildet andererseits einen Wärmespeicher, der als Temperaturausgleichselement Temperaturschwankungen im Sensor (16) infolge von Thermostössen verringert.

Je nach Ausgestaltung kann der neue Drucksensor (10) für heisse Verbrennungsgase, wie auch für Brenn- und andere flüssige oder gasförmige Stoffe verwendet werden. In der Anwendung für Brennkraftmaschinen-Überwachung entstehen ganz besondere Vorteile, indem der Drucksensor (10) **zwischen** Brennraum und Indizierventil, statt **nach** dem Indizierventil, montiert werden kann, wodurch periodisches Durchblasen und damit Entfernung aller Verbrennungsrückstände ermöglicht wird. Zudem kann jederzeit eine Kalibriermessung durchgeführt werden. Das neue Sensorkonzept ermöglicht damit erstmals eine zuverlässig messende Überwachungs-Anordnung für Brennkraftmaschinen, die erstens ohne Betriebsunterbruch jederzeit überprüft werden kann und zweitens kann der Sensorkörper (12) ebenfalls ohne Betriebsunterbruch ersetzt werden, falls dies einmal nötig wird. Damit ist eine bis anhin nicht realisierbare Überwachung der Brennkraftmaschine gewährleistet.

## Beschreibung

Aus der EP-B-283 524 sind ein Verfahren und eine Anordnung zur Messung des Innendruckes in rohrförmigen Körpern bekannt; bei dieser bekannten Anordnung werden zur Ermittlung des genannten Druckes zwei elektronische Summations- oder Subtraktionsschaltungen benötigt. Dies bedingt einen relative hohen apparativen Aufwand.

Weiterhin ist heute bei Brennkraftmaschinen, wie Diesel- oder Gasmotoren, zur Einhaltung von Emissions-Vorschriften, Sicherung vor Umweltschäden und Gewährleistung ökonomischer Betriebsdaten die Dauerüberwachung der Verbrennungsvorgänge in jedem Zylinder zur Bedingung geworden. Gleichzeitig wird die Leistungsabgabe eines jeden Zylinders zunehmend in die Überwachungsparameter übernommen, ebenso die Überwachung der Einspritzvorgänge. Der Druck der Versicherungsgesellschaften wird in Zukunft wesentlich erhöhte Anforderungen an Schiffsbetriebe stellen, indem die Überwachungsdaten dokumentierbar vorliegen müssen. Bei Gasmotoren muss jeder Zylinder auf Zündung überwacht werden, um Explosionen in den Abgasleitungen zu verhindern.

Die Zylinderdruckmessung in der Motorenforschung wird seit Jahrzehnten mit Zylinderdrucksensoren, die möglichst nahe an den Brennraum montiert werden, durchgeführt. Dazu werden fast ausschliesslich piezoelektrische Membran-Sensoren verwendet, deren Membranpartien hohen Flammentemperaturen ausgesetzt sind. Entsprechend ist deren Lebensdauer begrenzt.

Für Überwachungszwecke sind daher Sensoren gefordert, die mindestens eine volle Betriebsperiode eines Motors bis zur nächsten Grossrevision überstehen und in dieser Zeit eine optimale Repetitionsgenauigkeit aufweisen.

Bis heute existieren keine Sensoren, welche diese Anforderungen befriedigend erfüllen. Die heute auf dem Markt angebotenen Überwachungs-Drucksensoren sind auf dem Membranprinzip aufgebaut, wobei extra dicke Membranplatten verwendet werden, um Brüche vermeiden zu können. Diese verstärkten Plattenmembranen sind jedoch sehr temperaturempfindlich. Im Laufe des Betriebes verkrusten ihre Oberflächen mit Kohlerückständen, wodurch sich Fehlmessungen ergeben, die immer grösser werden. Zudem neigen zu dicke Plattenmembranen zu Ermüdungsrissen, die erst nach tausenden von Betriebsstunden auftreten können. In Erkenntnis dieser Probleme schlagen die Hersteller solcher Sensoren heute vor, dieselben nicht direkt im Zylinderdeckel, sondern erst **nach** dem Indikatorhahn anzubauen. Damit können einzelne Sensoren bei allfälligen Fehlanzeigen mechanisch abgeschaltet und durch einen Reservesensor ersetzt werden.

Diese Vorsichtsmassnahmen der heutigen Sensorhersteller bedingen einen hohen Aufwand für die Bereitstellung einer Reihe von Reservensensoren für jede Überwachungsanordnung. Dieser Nachteil soll durch die Erfindung behoben werden.

Aufgabe der Erfindung ist es daher, einen Drucksensor für gasförmige und/oder flüssige Medien, vor allem für die Überwachung von Brennkraftmaschinen, zu schaffen, der Robustheit und Zuverlässigkeit sowie hohe Empfindlichkeit und Genauigkeit mit möglichst grosser Temperaturstabilität, d.h. geringen Temperaturänderungen infolge von Thermostoss-Schwankungen von Brenngasen, vereinigt, um dynamische Thermostossfehler bei Verbrennungsdruckmessungen zu reduzieren.

Diese komplexe Aufgabe wird erfindungsgemäss dadurch gelöst, dass anstelle einer Flachmembrane eine kreiszylindrische Druckaufnahmefläche im Druckraum des Sensorkörpers vorgesehen ist, und dass im Druckraum ein konzentrisches Bolzenelement angeordnet ist, wodurch ein rohrförmiger Druckspalt geringen Volumens entsteht, aus welchen das Druckmedium radial auf die kreiszylindrische Druckaufnahmefläche wirkt, womit gleichzeitig ein Wärmespeicher als Temperaturausgleichselement vor der kreiszylindrischen Druckaufnahmefläche entsteht und unnötiger Totraum verhindert wird.

Für die Empfindlichkeit und Genauigkeit ist von Bedeutung, dass der Druckraumdurchmesser D relativ zur Gesamtgrösse des Sensorkörpers so gross gewählt wird, wie aus Festigkeits- und/oder Platzgründen möglich. Damit ergäbe sich jedoch bei hydraulischen Anwendungen, beispielsweise bei Messungen des Einspritzdruckes von Brennstoffen in Diesel- oder Gasmotoren, ein grosses Totvolumen. Dieses wird entscheidend reduziert durch das Bolzenelement mit einem Durchmesser d, welches den Druckraum in einen Druckspalt geringen Volumens verkleinert.

Bei der Druckmessung von heissen Gasen, beispielsweise bei der Verbrennungsdruckmessung von Brenngasen in Motoren, hat das Bolzenelement weiterhin einen entscheidenden Einfluss auf die Temperaturstabilität im Sensorkörper und damit auf die Messergebnisse. Dieser Einfluss beruht zum einen auf der Verkleinerung des Druckraumvolumens für das zu messende Medium auf einen schmalen Druckspalt, wodurch auch die dem Sensor zugeführte Wärmemenge erheblich reduziert wird; zum anderen bildet das Bolzenelement eine Art Wärmespeicher, in dem sich eine mittlere Temperatur einstellt, die die Thermostoss-Schwankungen infolge einzelner Motorzyklen in gewissem Umfang ausgleicht. Das Bolzenelement wird so zu einer relativ temperaturkonstanten und kühlen Wärmesenke, die die Gastemperaturschwankungen im Sensor in Grenzen hält.

Eine besonders vorteilhafte Ausführungsform des neuen Sensors ergibt sich, wenn der Sensorkörper mindestens im wesentlichen C-förmig ausgebildet ist, und wenn die tangentiale Bohrung parallel zur Sekante verläuft. Die C-Form ermöglicht eine indirekte Druckmessung aufgrund ihrer einseitig höheren Elastizität, die parallel zur Sekante ausgeprägt vorhanden ist und von dem Dehnmesselement in der tangentialen Bohrung erfasst wird; dabei verbessert der spiegelsymmetrische Aufbau der eigentlichen Messfühler Empfindlichkeit und Genauigkeit der Messergebnisse zusätzlich.

Für die Zylinderdruckmessung von Motoren ergibt der neue Sensor interessante neue Einbau-Anordnungen. So muss der Sensor zum Beispiel bei einer Überwachungsanordnung, im Gegensatz zum Stand der Technik, nicht **nach** einem mechanischen Absperrventil, sondern kann zwischen Absperrventil und Motorraum montiert werden. Zweck dieser Anordnung ist eine periodische Durchspülmöglichkeit, was durch kurzes Öffnen des Absperrventils bewirkt wird. Durch diese kurzzeitige Durchspülung wird die Oberfläche von allen Rückständen befreit, die ausgeblasen werden, wodurch sich die Messgenauigkeit periodisch immer wieder stabilisieren lässt. Im Gegensatz zu einer Plattenmembran erfährt der neue Sensor nur kleine Biegebeanspruchungen. Damit ist die Betriebsdauer des neuen Sensors ein Mehrfaches eines Sensors mit Plattenmembran. Der Aufbau des neuen Sensors und dessen vorzugsweise Anordnung zwischen Brennraum und Absperrventil, mit der Durchspülmöglichkeit, ermöglicht so eine Überwachungsanordnung, die ohne Reservesensoren auskommt und eine bisher unerreichte Repetiergenauigkeit erreicht. Die Erfindung erlaubt auch die kontinuierliche Auswertung der indizierten Leistung, respektive des mittleren indizierten Druckes eines jeden Zylinders, wozu hohe Repetiergenauigkeit der einzelnen Sensoren sowie eine genaue Referenz zur Kolbenstellung nötig sind.

Bei einer Ausführungsform des neuen Sensors beruht das Dehnmesselement auf piezoelektrischer Basis und weist als elektromechanisches Wandlerelement beidseits eines in seiner Mitte angeordneten Kontaktteils mindestens eine Piezoplatte auf.

Als Piezoplatten eignen sich Piezokeramikelemente oder Einkristalle wie Quarz, Tourmalin und andere Piezokristalle. Es ist jedoch auch möglich ein statisch messendes Dehnmesselement, basierend auf piezoresistiven Siliziumkristallen, auf Dünnfilmtechnik oder auf kapazitiver oder fiberoptischer Technik einzusetzen.

Für die Montage des neuen Sensors ist es vorteilhaft, wenn das Bolzenelement als zentrales Montageelement ausgebildet ist, mit dem der Sensor auf einem Behälter für das zu messende Medium, beispielsweise auf dem Zylinderdeckel einer Brennkraftmaschine montiert wird.

Die von der bereits kleinen Gasmenge im Druckspalt erzeugte Wärmebelastung des Sensors lässt sich weiter reduzieren, wenn der Sensorkörper mit einem Montagegewinde zum Einschrauben in einen Behälter für das zu messende Medium, beispielsweise in den Zylinderdeckel einer Brennkraftmaschine, versehen ist, oder wenn eine derartige Verbindung, beispielsweise zur Halterung des Drucksensors, zwischen einer Anschluss-Schraube für ein Indizierventil und dem Zylinderdeckel vorgesehen ist. Bei einer Brennkraftmaschine wird dadurch die Wärme der Verbrennungsgase aus dem Sensorkörper in den gekühlten Zylinderdeckel abgeleitet.

Die Halterung des Drucksensors mit Hilfe der Montage-Schraube bringt zusätzlich den Vorteil, dass der Drucksensor vor dem Festziehen der Schraube frei drehbar ist, was seine Montage erleichtert.

Eine Auswechslung des Drucksensors, beispielsweise während des Betriebes einer Brennkraftmaschine, wird - nach einem zusätzlichen Gedanken der Erfindung - ermöglicht, wenn der Sensorkörper mit Hilfe einer separaten Mutter, die auf einen, in den Druckraum als Bolzenelement eingesetzten Einschraub-Stehbolzen aufschraubbar ist, lösbar auf dem Zylinderdeckel gehalten ist, und wenn weiterhin die Gaszufuhr zum Druckraum des Sensorkörpers innerhalb des Stehbolzens, beispielsweise durch eine Ventilschraube, absperrbar ist.

Um das in der tangentialen Bohrung angeordnete empfindliche Messelement vor Biegeeinflüssen infolge von Vibrationen zu schützen, ist es weiterhin vorteilhaft, im Sensorkörper, in Richtung der Achse des Druckraumes gesehen, beidseits der tangentialen Bohrung Entlastungsschlitze vorzusehen.

Die Erfindung soll anhand der folgenden Figuren erläutert werden:

Es zeigen:
- Fig. 1: den Stand der Technik an einem Sensor montiert auf einem Indizierventil,
- Fig. 2: den neuen Sensor in einer vorteilhaften Ausführungsform mit C-förmigem Sensorkörper, isometrisch dargestellt,
- Fig. 3: einen Sensor im Schnitt senkrecht zur Achse des rohrförmigen Druckspaltes,
- Fig. 4: eine Ausführungsform des neuen Sensors, mit Hilfe des Bolzenelementes aufmontiert auf den Zylinderdeckel einer Brennkraftmaschine,
- Fig. 5: den Schnitt D-D von Fig. 4,
- Fig. 6: eine weitere Ausführungsform des neuen Sensors auf einer Brennkraftmaschine, wobei der Zuführkanal für das Druckmedium über ein Absperrventil nach aussen geführt ist,
- Fig. 7: eine Ausführungsform ähnlich derjenigen von Fig. 6,
- Fig. 8: eine Ausführungsform mit aufmontiertem Indizierstutzen einer Brennkraftmaschine,
- Fig. 9: eine weitere Ausführungsform, bei der der Zuführkanal für das Druckmedium über ein Absperrorgan mit einem Anschluss für ein Kalibriergerät verbunden ist,
- Fig. 10: eine Ausführungsform mit einem Montagegewinde, die vorzugsweise zur Messung des Einspritzpumpendruckes eingesetzt wird,
- Fig. 11: eine Anordnung für den Einsatz des neuen Sensors an einer Brennkraftmaschine,
- Fig. 12: eine weitere Ausführungsform, bei der der Sensor mit einem angesetzten Montagegewinde direkt auf einem Behälter für das zu messende Druckmedium montiert werden kann, und
- Fig. 13: ein Schnitt A - A von Fig. 12.

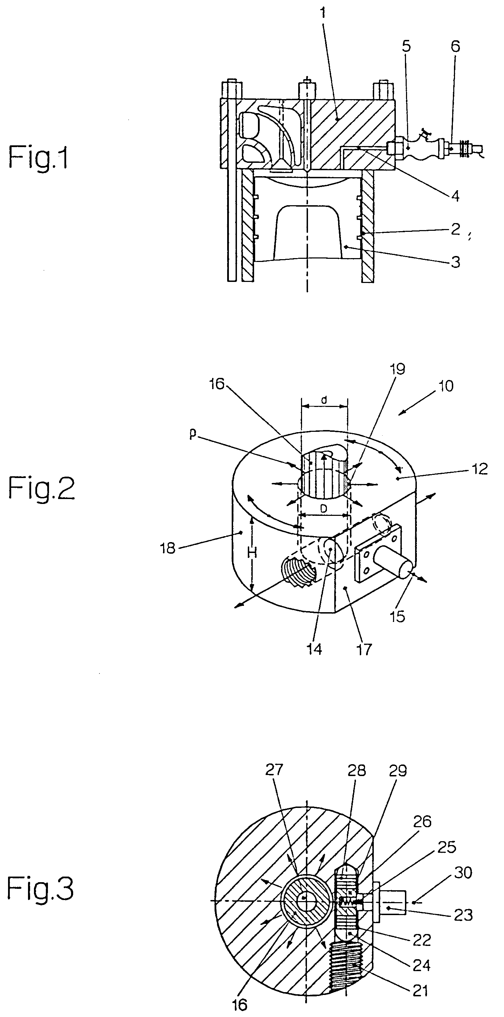

Fig. 1 zeigt, nach dem Stand der Technik, eine vereinfachte Montage eines Überwachungs-Sensors 6, der auf einem Absperrorgan, z.B. dem Indikator- oder Indizierventil 5 einer Brennkraftmaschine, montiert und über den Druckkanal 4 mit dem Brennraum verbunden ist. Der Zylinder 2 umfasst Kolben 3. Der Drucksensor 6 weist eine nicht gezeigte Plattenmembran auf, welche via Durchbiegung die elektrischen Werte verstellt. Solche Drucksensoren sind in Fachschriften beschrieben.Das Volumen eines handelsüblichen Überwachungssensors 6 ist meist grösser als dasjenige des Indikatorventils 5, sodass sich durch die Einbaulänge meist ein schwingungsempfindliches Gebilde ergibt. Im normalen Messbetrieb ist das Indizierventil 5 geöffnet, womit der Drucksensor 6 unter normalem Betriebsdruck steht. In vielen Fällen werden die Drucksensoren 6 jedoch nur von Zeit zu Zeit eingeschaltet, um ihre Lebensdauer zu verbessern. Damit ist jedoch die Qualität der Überwachung wesentlich reduziert und eine Verstopfung des Druckkanals 4 jederzeit möglich. Durch Wiederöffnen des Indizierventils 5 kann diese Verstopfung nicht behoben werden, da kein Durchblasen erfolgt. Es bleibt deshalb nichts anderes als die Drucksensoren 6 periodisch auszubauen und die Indizierventile 5 durchblasen zu lassen. Bei Ausfall eines Drucksensors 6 ist das Indizierventil 5 zu schliessen bis ein Reservesensor aufgebaut werden kann.

Aus Vorstehenden ist ersichtlich, dass die heutigen Überwachungs-Anordnungen selber dauernd überwacht und bedient werden müssen, was deren Anwendbarkeit zweifelhaft erscheinen lässt.

In der schematischen, isometrischen Prinzip-Darstellung des neuen Sensors 10 in Fig. 2 ist der Sensorkörper 12 eine Scheibe mit kreisförmiger Aussenfläche 18, die durch eine Sekantenfläche 17 begrenzt ist. In der Mitte der Scheibe befindet sich ein Druckraum, dessen Durchmesser D ist, und in welchen ein Bolzenelement 16 mit dem Durchmesser d eingesetzt ist, wodurch für das Messmedium ein Druckspalt 19 geringen Volumens entsteht, aus dem heraus es auf die kreiszylindrische Druckaufnahmefläche 20 wirkt. Das Bolzenelement 16 kann dabei sowohl massiv als auch hohl ausgebildet sein, siehe z.B. Bohrung 27 in Fig. 3.

Etwa in der Mitte der Höhe H des scheibenförmigen Sensorkörpers 12 ist eine tangentiale Dehnmessbohrung 14 angeordnet, in welcher ein Dehnmesselement 22 (Fig. 3) die Dehnung misst, die infolge des Messdruckes p im Druckspalt 19 entsteht. Die tangentiale Bohrung ist einerseits mit ihrer Längsachse gegenüber der Achse des Druckspalt"rohres" 19 um 90° gedreht und verläuft andererseits tangential zum Mantel dieses "Rohres"; darüber hinaus ist sie parallel zur Sekante 17 des scheibenförmigen Sensorkörpers 12 ausgerichtet. Zur Abführung der Mess-Signale ist in der Mitte des Messelementes 22, das nachfolgend noch näher beschrieben wird, eine Signalleitung 15 vorgesehen.

Das als Beispiel in Fig. 3 gewählte piezoelektrische Dehnmesselement 22, das bereits auf Nanometer-Längenänderungen anspricht, ist von einem Vorspannteil 21 unter Vorspannung gehalten. Ein Stecker 23 nimmt das Mess-Signal quer zur Dehnungsrichtung in der Mitte des Elementes 22 von einer Kontaktfeder 25 in einer Bohrung 26 eines Kontaktteils 20 ab. Die Kontaktfeder 25 liegt in einer Symmetrieebene 30 für das Dehnmesselement 22, zu der mindestens der Kontaktteil 20 und Piezoscheiben 28 spiegelsymmetrisch aufgebaut sind. Um eine einwandfreie Druckmessung zu erleichtern, fällt die Symmetrieebene 30 vorteilhafterweise mit einer Radialebene des rohrförmigen Druckspaltes 19 zusammen. Zwecks Isolation zwischen positiven und negativen Ladungen sind die Piezoscheiben 28 mit dem Kontaktteil 20 in eine Isolierhülse 29 eingebettet. Als Piezoscheiben eignen sich solche aus Quarz, oder aus einer Piezokeramik, wie sie handelsüblich sind.

Es ist aber auch möglich ein Dehnmesselement 22 auf piezoresistiver, kapazitiver, fiberoptischer oder auf Dehnmessstreifenbasis zu bauen. Da sich die Dehnbewegungen nicht genau in der Achse der tangentialen Bohrung 14 auswirken, ist ein- oder beidseitig des Dehnmesselementes 22 eine Kugelabstützung 24 angebracht.

Zusätzlich zum oder statt des Vorspannteils 21 kann die gesamte Anordnung der Einzelteile auch mit einer unter Vorspannung gesetzten Vorspannhülse spaltfrei zusammengehalten sein, so dass keine Spaltflächen entstehen und zusätzlich das Dehnmesselement 22 einfach montierbar ist.

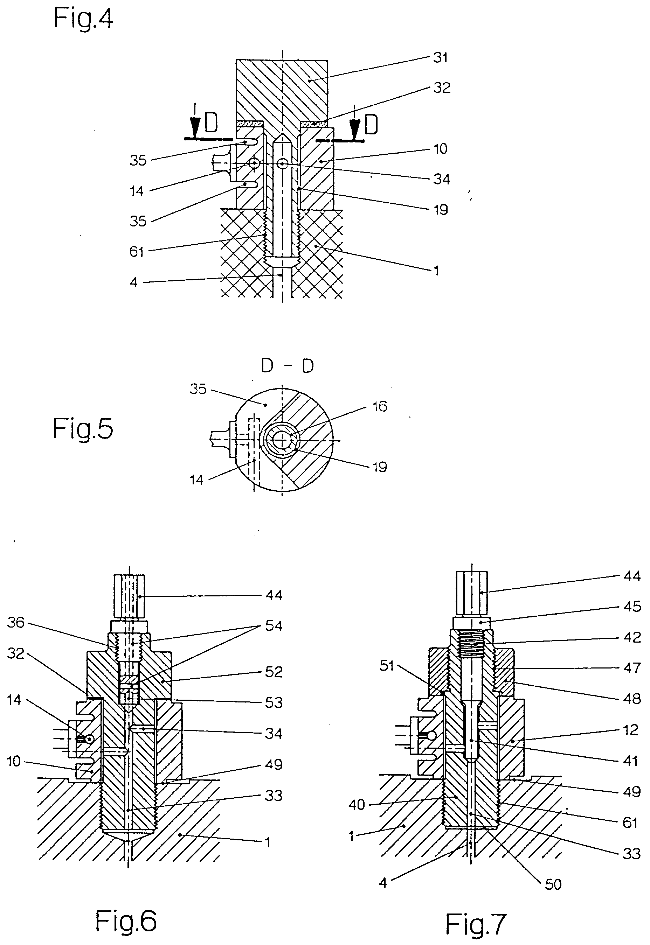

Zur Montage des neuen Sensors können verschiedene Mittel angewendet werden, z.B. Verschraubungsteile, die nicht gezeigt sind. Zur Abdichtung des Vorspannteils 21 empfiehlt sich eine nicht gezeigte Verschweissung. Bei der Ausführungsform nach Fig. 4 und 5 ist das Bolzenelement

als Montageschraube 31 ausgebildet, die den Sensorkörper 12 durchsetzt. Sie fixiert den Sensor 10 auf dem Zylinderdeckel und ist selbst in den Zylinderdeckel 1 einer Brennkraftmaschine eingeschraubt (Gewinde 61).Ein Dichtring 32 ist zwischen der Montageschraube 31 und dem Sensor 10 eingelegt.

Da der Zylinderdeckel 1 der Brennkraftmaschine gekühlt wird, kann über die Montage-Schraube 31 die von heissen Verbrennungsgasen in den Sensorkörper 12 eingeleitete Wärme rasch abfliessen, und damit den Sensor 10 relativ kühl gehalten werden.

Der heisse Gasstrom wird vom Druckkanal 4 über eine Zuleitungsbohrung 33 und eine Querbohrung 34 zum Druckspalt 19 geleitet, der wiederum nur einen dünnwandigen Heissgasfilm zulässt, welcher wenig Wärmeenergie mit sich führt. Die im wassergekühlten Zylinderdeckel 1 befestigte Montage-Schraube bildet dabei eine Art Wärmespeicher mit relativ zur Gasmenge im Druckspalt 19 grosser Masse und damit grosser Wärmekapazität. Er weist gegenüber den in ihrer Temperatur schwankenden Verbrennungsgasen eine mittlere Temperatur auf und dämpft damit die durch Thermostoss verursachten Temperaturschwankungen im Sensor 10.

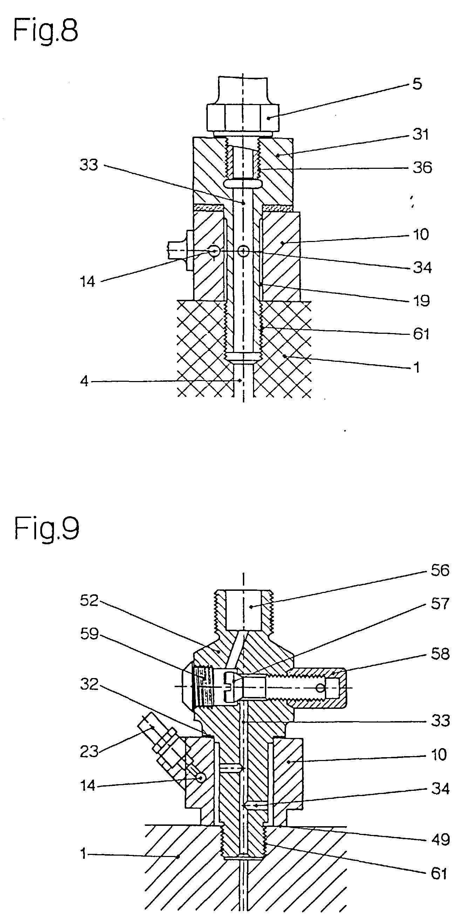

Um allfällige Störkräfte infolge von Biegeschwingungen des Systems von der Dehnmessbohrung 14 fernzuhalten, sind beidseitig derselben Entlastungsschlitze 35 vorgesehen. Fig. 5 zeigt die Ausbildung der Entlastungsschlitze 35 beidseits der Dehnmessbohrung 14. Eine ähnliche Konstruktion wie Fig. 4 zeigt Fig. 8. Bei dieser ist

die Montageschraube 31 als durchgehend hohle Anschluss-Schraube für das Indizierventil 5 ausgebildet, das über ein Gewinde 36 in ihren Kopf eingeschraubt wird.

Die Anordnung nach Fig. 8 kombiniert somit den Drucksensor 10 mit dem Indizierventil 5 und ermöglicht ein Durchspülen des Sensors zu Reinigungszwecken sowie seinen Austausch jederzeit ohne Betriebsunterbruch.

Bei dem Ausführungsbeispiel nach Fig. 6 ist das Bolzenelement, ähnlich wie in Fig. 4 und 8, eine Montageschraube 52. Diese ist, wie die Montageschraube 31 in Fig. 8, durchgehend hohl. Sie enthält einen Ventilteil 53, der durch einen Verstellteil 44 über das Gewinde 36 die Zuleitungsbohrung 33 oberhalb der im Bereich des Sensors 10 zum Druckraum 19 führenden Querbohrung 34 verschliesst. Der Ventilteil 53 und der Verstellteil 44 sind mit Entlüftungsbohrungen 54 versehen. Sie dienen dazu, die Zylinder der Brennkraftmaschine beim "Durchdrehen" während Revisionsarbeiten nach Öffnen des Ventilteils 53 zu entlüften.

Fig. 7 zeigt eine Ausführungsform, welche eine weitere Optimierung des Grundkonzeptes ermöglicht. Ein Schraubbolzen 40 ist fest in den Zylinderdeckel unter Zwischenlage einer Dichtung 50 eingeschraubt und enthält ein integriertes Indizierventil, gekennzeichnet durch den Ventilteil 41 und einen Schraubteil 42, wodurch sich mittels Verstellschraube 44 und Feststellteil 45 der Druckkanal 4 öffnen oder schliessen lässt. Der Sensorkörper 12 wird bei diesem Beispiel mit Mutter 48 auf die Dichtfläche 49 gepresst, wobei die Signalabnahmen jeweils in die beste Position gedreht werden können. Ein Dichtring 51 dichtet den Druckspalt 19 nach oben ab. Bei geschlossenem Ventilteil 41 wird nach Lösen der Mutter 48 eine Abnahme des Drucksensors 10 möglich, ohne dass die Brennkraftmaschine stillgesetzt werden muss.

Das wiederum eine Montageschraube 52 bildende Bolzenelement der Fig. 9 weist in seinem Kopf einen quer zur Zuführungsleitung 33 liegenden Ventilteil 57 auf, der diese wiederum verschliesst. Der Ventilteil 57 ist auf einer Seite mit einem Feststellteil 58 versehen und endet mit seinem Ventilkörper in einer nach aussen führenden Öffnung, durch die hindurch dieser durch Drehen in einem Gewinde mit Hilfe eines Schraubenziehers vom Sitz abgehoben oder auf diesen gepresst werden kann. Die Öffnung kann durch ein Verschlussteil 59 gegen aussen verschlossen werden. Sie weist darüber hinaus eine Strömungsverbindung zu einem Anschlussteil 56 für den Anschluss eines nicht gezeigten Kalibriergerätes auf.

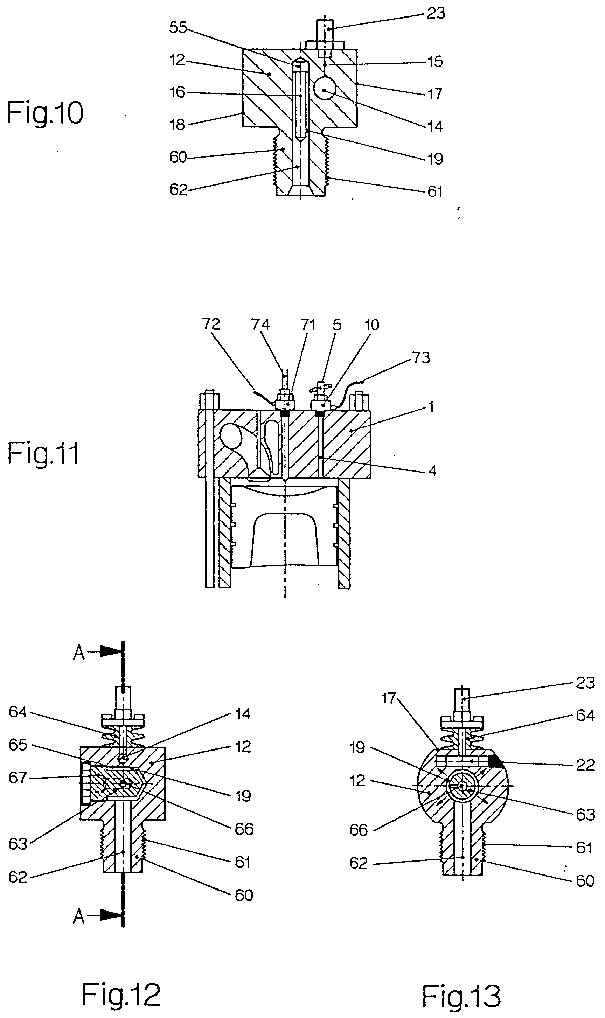

Die mit einem Montagestutzen 60 und einem Gewinde 61 versehene Ausführungs-Variante des neuen Sensors nach Fig. 10 ist beispielsweise für Einspritzdruckmessungen in Diesel- oder Gasmotoren vorgesehen; bei ihr ist in dem Druckraum als Bolzenelement 16 ein Einpress-Zapfenelement 55 eingesetzt. Das Element 16 hat hier in erster Linie die Aufgabe, den Totraum zu verringern und den Druckraum wiederum zu einem Druckspalt 19 zu verkleinern. Der mit dem Bolzenelement 16 erzielte Temperatureffekt ist hier von geringerer Bedeutung, da keine Thermoschocks auftreten. Die Signalleitung 15 und der Stecker 23 können radial oder axial zum Druckspalt 19 angeordnet sein.

Fig. 11 zeigt schematisch eine Anordnung des neuen Sensors auf dem Zylinderdeckel 1, bei welcher der Drucksensor 10 möglichst nahe am Brennraum montiert ist, um einen kurzen Druckkanal 4 zu realisieren. Das Indizierventil 5 ist an servicefreundlicher Lage angeordnet, am Ende einer Verbindungsleitung, sodass der Drucksensor 10 zwischen Brennraum und Indizierventil 5 plaziert ist. Selbstverständlich ist es auch möglich, das Indizierventil 5 direkt an den Drucksensor 10 anzubauen oder diesen in das Indizierventil 5 zu integrieren, d.h. beide in **einem** Bauelement zu vereinen; dies ist besonders für eine Nachrüstung bereits inbetriebstehender Motoren von Vorteil. Durch Öffnen des Handrades des Indizierventils 5 kann der Druckkanal 4 periodisch durchgeblasen werden, wodurch allfällige Rückstände entfernt werden.

Auf einem Einspritzdüsenhalter, in den eine Einspritzleitung 74 mündet, ist zur Messung des Einspritzdruckes ein weiterer Sensor 71 ähnlich demjenigen von Fig. 8, also mit einer Durchgangsbohrung 33, vorgesehen, die für die Zuführung von Brennöl oder -gas dient. Anschlusskabel für die Weiterleitung der Signale von Einspritzdruck und Zylinderdruck sind mit 72 und 73 bezeichnet.

Bei dem Beispiel nach Fig. 12 und 13 sitzt der wiederum in C-Form ausgeführte Sensorkörper 12 ebenfalls auf einem Montagestutzen 60 mit dem Gewinde 61, mit dem er direkt an eine Druckzuführungsleitung 62 für das zu messende Medium angeschlossen werden kann. Seine tangentiale Bohrung für das Messelement 22 und die Sekante der C-Form befinden sich dabei diametral gegenüber dem Montagestutzen 60. Dementsprechend liegen der Druckraum 65 und der rohrförmige Druckspalt 19 mit ihren konzentrischen Längsachsen quer zur Leitung 62, wobei ein, den Druckspalt 19 "erzeugender", Zapfen 63 von der Seite in den Sensorkörper 12 eingeschraubt ist. Im Zapfen 63 können Bohrungen 66 vorgesehen sein, die eine Verbindung zwischen einem Anschluss 67 für einen Kalibriersensor und dem Druckraum 65 herstellen und so ebenfalls eine ständige Überwachung des neuen Drucksensors ermöglichen.

Zwischen dem Stecker 23 für die Signalleitungsanschlüsse und der Sekante 17 des Sensorkörpers 12 ist ein mit Rippen versehener Kühlkörper 64 angebracht, der vorzugsweise aus einem schlecht wärmeleitenden Material, beispielsweise aus Spritzguss oder Keramik besteht. Er dient dazu, die an die Signalleitungen angeschlossene Elektronik vor zu hohen Temperaturen zu schützen.

Der erfindungsgemässe, neue Drucksensor, der sowohl für Flüssigkeiten wie für Gase eingesetzt werden kann, ermöglicht im Falle der Anwendung auf Brennkraftmaschinen erstmals eine Dauerüberwachung der relevanten Parameter. Die Möglichkeit, die Signalübertragung durch Reinigung des Druckkanals 4 und der Zuleitungsbohrung 33 mittels periodischen Durchblasens konstant zu halten und die Kalibriermöglichkeiten ergeben eine neue Betriebssicherheit, die bis anhin nicht realisierbar war. Auch die erfindungsgemässe Anwendung des neuen Sensors auf Einspritzvorgänge für Öle oder Brenngase sowie die immer höheren Spitzendruck-Anwendungen gestatten, infolge des indirekten Messprinzips, eine bis anhin unbekannte Betriebssicherheit. Die neue Sensorik erbringt damit bedeutende Fortschritte, insbesondere in der Überwachung von Brennkraftmaschinen.

### Figuren und Bezeichnungen:

- Fig. 1: 1 Zylinderdeckel
2 Zylinder
3 Kolben
4 Druckkanal
5 Absperrmittel, z.B. Indizierventil
6 Drucksensor
- Fig. 2: 10 Drucksensor in der Ausführungsform als C-Form-Sensor
12 Sensorkörper
14 Tangentiale Dehnmessbohrung
15 Signalleitung radial angeschlossen
16 Bolzenelement
17 Sekantenfläche
18 Kreiszylindrische Aussenfläche
19 Rohrförmiger Druckspalt
20 Kreiszylindrische Druckaufnahmefläche
- Fig. 3: 21 Vorspannteil
22 Dehnmesselement
23 Stecker
24 Kugelabstützung
25 Kontaktfeder
26 Kontaktteil
27 Bohrung
28 Piezoscheiben
29 Isolationshülse
30 Symmetrieebene
- Fig.4,5 und 8: 31 Montage-Schraube
32 Dichtring
33 Zuleitungsbohrung
34 Querbohrung
35 Entlastungssschlitze
36 Gewinde
- Fig.6,7: 40 Einschraub-Stehbolzen
41 Ventilteil achsial
42 Schraubteil
44 Verstellschraube
45 Feststellteil
47 Gewinde
48 Mutter
49 Dichtfläche
50 Dichtelement
51 Dichtring
52 Montage-Schrauben
53 Ventilteil achsial
54 Entlüftungsbohrung
- Fig. 9: 56 Anschlussteil für Kalibriergerät
57 Ventilteil 90°
58 Feststellteil
59 Verschlussteil
- Fig. 10: 55 Einpresszapfenelement
60 Montagestutzen
61 Gewinde
- Fig. 11: 70 Einspritzdüsenhalter
71 Drucksensor für den Einspritzdruck
72 Anschlusskabel Einspritzdruck
73 Anschlusskabel Zylinderdruck
74 Einspritzleitung
- Fig. 12 und 13: 62 Druckzuführungsleitung
63 Zapfenelement
64 Kühlkörper
65 Zylindrischer Druckraum
66 Kontrollbohrung
67 Anschluss für Kalibriersensor

## Patentansprüche

1. Drucksensor für gasförmige und/oder flüssige Medien, insbesondere für die Überwachung von Brennkraftmaschinen, beispielsweise Diesel- und Gasmotoren, mit einem Sensorkörper (12), der einen Druckraum für das zu messende Medium und eine zur Druckraumachse um 90° gedrehte und zu seinem Mantel tangentiale Bohrung (14) zur Aufnahme eines Dehnmesselementes aufweist, dadurch gekennzeichnet, dass im Druckraum ein konzentrisches Bolzenelement (16,31,40,52, 63) so angeordnet ist, dass ein rohrförmiger Druckspalt (19) geringen Volumens entsteht, aus welchem das Druckmedium radial auf die kreiszylindrische Druckaufnahmefläche (20) des Sensorkörpers (12) wirkt, wodurch eine Wärmespeicherwirkung und gleichzeitig eine Totraumreduktion erreicht wird.

2. Drucksensor nach Anspruch 1, dadurch gekennzeichnet, dass der Sensorkörper (12) mindestens im wesentlichen C-förmig ausgebildet ist, und dass die tangentiale Bohrung (14) parallel zur Sekante (17) verläuft.

3. Drucksensor nach Anspruch 1 oder 2, dadurch gekennzeichnet, dass das Bolzenelement (16) als zentrales Montageelement in Form einer Montageschraube (31,52) ausgebildet ist, in deren Schaft die Zuleitungsbohrung (33) für das Druckmedium untergebracht ist, welches über Querbohrung (34) zur kreiszylindrischen Druckaufnahmefläche (20) des Sensorkörpers (12) geführt ist.

4. Drucksensor nach Anspruch 3, dadurch gekennzeichnet, dass der Schraubenkopf zusätzlich mit einem Gewinde (36) für ein Absperrventil (5) versehen ist.

5. Drucksensor nach Anspruch 1 oder 2, dadurch gekennzeichnet, dass das Bolzenelement (16) als zentrales Montageelement in Form eines Einschraub-Stehbolzens (40) ausgebildet ist, der mittels Dichtelement (50) direkt in den Zylinderkopf (1) montiert ist, wobei der Sensorkörper (12) mit Mutter (48) gegen eine Dichtfläche (49) gepresst und mit Dichtring (51) abgedichtet wird.

6. Drucksensor nach einem der Ansprüche 1 bis 5, dadurch gekennzeichnet, dass der Sensorkörper (12) eine kreiszylindrische Druckaufnahmeoberfläche (20) aufweist, die auf radial wirkendem Druck (p) in der Tangentialbohrung (14) eine proportionale Dehnung erzeugt, die mittels Dehnmesselement (22) erfasst und gemessen wird.

7. Drucksensor nach einem der Ansprüche 1 bis 4, dadurch gekennzeichnet, dass der Kopf der Montageschraube (52) mit einem achsial angeordneten Ventilteil (53) versehen ist, der die Zuleitungsbohrung (33) nach Querbohrungen (34) abschliesst und nach Öffnung mittels Verstellschraube (44) via Entlüftungsbohrungen (54) mit der Atmosphäre verbindet, womit Bewegung des Kolbens (3) ohne Kompression möglich ist.

8. Drucksensor nach einem der Ansprüche 1 bis 4, dadurch gekennzeichnet, dass der Schaft des Einschraub-Stehbolzens (40) mit einem achsial angeordneten Ventilteil (41) versehen ist, der die Zuleitungsbohrung (33) so abschliesst, dass kein Druck auf die Druckaufnahmefläche (20) des Sensorkörpers (12) gelangt, wodurch derselbe nach Lösen der Mutter (48) bei normalem Motorlauf ausgewechselt werden kann.

9. Drucksensor nach einem der Ansprüche 1 bis 3, dadurch gekennzeichnet, dass der vergrösserte Kopf der Montageschraube (52) ein Ventilteil (57) schräg- oder rechtwinklig zur Schraubenachse aufweist und mit einem Anschlussteil (56) für ein Kalibriergerät versehen ist.

10. Drucksensor nach einem der Ansprüche 1 bis 9, dadurch gekennzeichnet, dass das Absperrventil (5,53,57) **nach** dem Sensorkörper (12) angeordnet ist, wodurch derselbe periodisch im Betrieb durchgeblasen und von allfälligen Verkrustungen gereinigt werden kann.

11. Drucksensor nach einem der Ansprüche 1, 2, 3 oder 8, dadurch gekennzeichnet, dass der Einschraub-Stehbolzen (40) die Mutter (48) und der achsiale Ventilteil (41) so angeordnet sind, dass der Sensorkörper (12) im Betrieb der Maschine ausgewechselt werden kann.

12. Drucksensor nach Anspruch 1 oder 2, dadurch gekennzeichnet, dass das Bolzenelement (16) achsial als Einpress-Zapfenelement (55) zur Reduktion des Totvolumens im zylindrischen Druckraum ausgebildet ist.

13. Drucksensor nach Anspruch 1 oder 2, dadurch gekennzeichnet, dass Sensorkörper (12) und Montagestutzen (60) einstückig sind, wobei das Bolzenelement (16) als Zapfenelement (63) quer zum Montagestutzen (60) angeordnet ist.

14. Drucksensor nach Anspruch 13, dadurch gekennzeichnet, dass das Zapfenelement (63) mit einer Kontrollbohrung (66) versehen ist, die zum Anschluss (67) für einen Kalibriersensor führt.

15. Drucksensor nach einem der Ansprüche 1 bis 14, dadurch gekennzeichnet, dass zwischen Sensorkörper (12) und Stecker (23) ein Kühlkörper (64) eingebaut ist, der es ermöglicht, im Steckerteil (23) Vorverstärkerelektronik unterzubringen.

16. Drucksensor nach einem der Ansprüche 1 bis 11, dadurch gekennzeichnet, dass im Sensorkörper (12), in Richtung der Achse des rohrförmigen Druckspaltes (19) gesehen, beidseits der tangentialen Bohrung (14) Entlastungsschlitze (35) vorgesehen sind.

17. Drucksensor nach einem der Ansprüche 1 bis 16, dadurch gekennzeichnet, dass das unter Vorspannung eingebaute Dehnmesselement (22) auf piezoelektrischer Basis aufgebaut ist.

18. Drucksensor nach einem der Ansprüche 1 bis 16, dadurch gekennzeichnet, dass das unter Vorspannung eingebaute Dehnmesselement (22) auf ohmscher, kapazitiver oder fiberoptischer Basis aufgebaut ist.
